# EUROPÄISCHE PATENTSCHRIFT

(11) **EP 0 968 386 B1**
(45) Veröffentlichungstag und Bekanntmachung des Hinweises auf die Patenterteilung: **29.08.2001**
(21) Anmeldenummer: 98924032.0
(22) Anmeldetag: 20.03.1998
(51) Int. Cl.: F16N 3/12

(54) **PRESSE ZUM VERPRESSEN VON SCHMIERFETTEN SOWIE HIERBEI VERWANDETE KARTUSCHE**
PRESS FOR COMPRESSING LUBRICATING GREASE AND THE CARTRIDGES USED THEREFOR
PRESSE DESTINEE A COMPRIMER DES LUBRIFIANTS ET CARTOUCHE UTILISEE A CET EFFET

(30) Priorität: 22.03.1997 DE 19712151; 08.11.1997 DE 19749512
(43) Veröffentlichungstag der Anmeldung: 05.01.2000
(73) Patentinhaber: MATO Maschinen- und Metallwarenfabrik Curt Matthaei GmbH & Co KG, D-63071 Offenbach (DE)
(72) Erfinder: Simon, Steffen, D-63594 Niedermittlau (DE)
(74) Vertreter: Quermann, Helmut, Dipl.-Ing.
(86) Internationale Anmeldenummer: DE9800825
(87) Internationale Veröffentlichungsnummer: WO9843012

(56) Entgegenhaltungen:
- DE-A- 2 214 652
- US-A- 5 044 471

## Beschreibung

Die Erfindung betrifft eine Presse zum Verpressen von Schmierfetten, mit einem Pressenkopf mit einer Hochdruck-Kolbenpumpe, einer Hochdruck-Auslaßöffnung mit Rückschlagventil und einer Niederdruck-Ansaugöffnung zum Zuführen der zu verpressenden Masse zur Kolbenpumpe, einer Vorrichtung zum Betätigen des pumpenkolbens der Kolbenpumpe und einem Anschluß am Pressenkopf zum Verbinden eines Rohres mit dem Pressenkopf, wobei das Rohr eine mit dem Schmierfett gefüllte, zylindrisch ausgebildete Kartusche mit verschieblichem Folgekolben aufnimmt.

Eine derartige Presse, die als Handhebelpresse ausgebildet ist, ist aus der DE-A-22 14 652 bekannt. Dort weist die steife Kartusche im Bereich ihres dem Pressenkopf zugewandten Endes einen umlaufenden Wulst auf, der zwischen dem in den Pressenkopf eingeschraubten Rohr und dem Pressenkopf geklemmt ist. Der die Ausgabeöffnung für die Viskosemasse aufweisende Kartuschenboden ist erhaben ausgebildet, so daß dessen Ringrand am Pressenkopf anliegt. Zwischen dem Wulst der Kartusche und dem Pressenkopf ist eine Dichtung vorgesehen, die gleichfalls verhindern soll, daß die Viskosemasse in den zwischen der Kartusche und dem Rohr gebildeten Ringspalt gelangt. Das dem Pressenkopf abgewandte Ende des Rohres ist offen ausgebildet, so daß durch die Öffnung die Position des im Rohr verschiebbar gelagerten Folgekolbens und damit der Füllzustand der Kartusche von außen erkannt werden kann. Der Durchmesser der Öffnung im Rohr ist geringer bemessen als der Außendurchmesser der Kartusche. Zum Auswechseln einer Kartusche ist es damit erforderlich, das Rohr von dem Pressenkopf abzuschrauben, von der dem Pressenkopf zugewandten Seite des Rohres eine neue Kartusche mit Wulst einzusetzen und das Rohr wieder mit dem Pressenkopf zu verschrauben.

Die Gestaltung der Hebelpresse und der im Zusammenhang mit dieser Verwendung findenden Kartusche weist diverse Nachteile auf. So ist es recht aufwendig, die Kartusche zu wechseln, weil der Pressenkopf und das Rohr getrennt werden müssen. Es sind im übrigen Dichtmaßnahmen zwischen Kartusche und Pressenkopf bzw. Rohr vorzusehen. Die Kartusche ist aufwendig zu gestalten, da sie nicht als Bauteil mit konstantem Innen- und Außendurchmesser ausgebildet ist, sondern einen Wulst aufweist. Der in der Kartusche befindliche Inhalt, das heißt der Schmierfetttyp, ist von außen nicht erkennbar, da Hinweise auf das jeweils in der Kartusche befindliche Schmierfett in aller Regel im Bodenbereich des Zylinderabschnittes der Kartusche angebracht sind.

Aus der US-A-5 044 471 ist eine Handhebelpresse zum Verpressen von Schmierfetten bekannt. Dort findet statt einer zylindrischen Kartusche eine Balgkartusche Verwendung. Diese hat unter anderem den Nachteil, daß sie keine vollständige und saubere Entleerung ermöglicht. Zwischen dem Pressenkopf und einem in diesen eingeschraubten Rohr ist ein Anschlußelement geklemmt, das einen Anschluß zum Einschrauben der Balgkartusche aufweist. Das die Balgkartusche umgebende Rohr ist im Bereich seines dem Pressenkopf abgewandten Endes geschlossen und innerhalb des Rohres eine Druckfeder angeordnet, die zwischen diesem Ende und einem die Balgkartusche beaufschlagenden Kolben wirksam ist. Mit zunehmender Entleerung wird die Balgkartusche zusammengedrückt. Von außen ist der Füllungszustand der in das Rohr eingesetzten Balgkartusche nicht zu erkennen. Zum Ersetzen der Balgkartusche muß das Rohr aus dem Pressenkopf herausgeschraubt werden.

Aus der GB-A-2 273 745 ist gleichfalls eine Handhebelpresse zum Verpressen von Schmierfetten bekannt, bei der eine Balgkartusche Verwendung findet. Diese wird im Bereich ihres Ausgabestutzens unmittelbar in den Pressenkopf eingeschraubt und ist von einem gleichfalls in den Pressenkopf eingeschraubten Rohr umgeben. Das Rohr ist im Bereich seines dem Pressenkopf abgewandten Endes offen ausgebildet. Die Balgkartusche befindet sich ausschließlich innerhalb des vom Rohr umschlossenen Raumes, so daß sie gegen Beschädigung von außen beim Hantieren mit der Presse geschützt ist. Um den Füllstand der Balgkartusche erfassen zu können, ist das Rohr seitlich mit einem sich in Längsrichtung des Rohres über einen Teil dessen Länge erstreckenden Schlitz versehen. Entsprechend dem Füllungszustand der Balgkartusche und damit dem bei gefüllter Kartusche größeren Abstand der umlaufenden Balgkanten, hingegen bei teilweise bzw. vollständig entleertem Zustand geringerem Abstand dieser Balgkanten, läßt sich durch den Schlitz der ungefähre Füllungszustand der Balgkartusche erkennen. Da die Balgkartusche sich mit zunehmender Entleerung zusammenzieht, ist es zu deren Austausch erforderlich, das Rohr vom Pressenkopf abzuschrauben.

Unter der Typenbezeichnung MATO DF 500 ist eine pneumatische Einhandpresse der Firma MATO Maschinen- und Metallwarenfabrik Curt Matthaei GmbH & Co. KG, Mühlheim, bekannt geworden. Diese weist einen Hauptkörper auf, der im wesentlichen durch das Druckaggregat und den Pressenkopf gebildet ist. Dort wird die Kartusche, nachdem deren Verschlußdeckel entfernt worden ist, zusammen mit dem Fettpressenzylinder in den Pressenkopf eingeschraubt. Pneumatische Pressen für Schmierfette sind im übrigen aus der DE-A-35 27 925 bekannt.

Ein Spender zur Ausgabe pastöser Massen, zum Beispiel Zahnpasta, ist aus der DE-A-40 13 705 bekannt. Bei diesem findet eine zylindrische Kartusche mit einem Standfuß Verwendung, die ein Gehäuse kompletiert, das eine in einem Kopfstück angeordnete Fördereinrichtung zur proportionierten Ausgabe der Masse aus einem Mundstück unter schrittweisem Vorschub eines in der Kartusche angeordneten Nachlaufkolbens aufweist. Die Kartusche wird durch die untere Öffnung des Gehäuses in einen rohrförmigen Abschnitt des Gehäuses eingeführt und die Kartusche mit ihrem, ein Außengewinde aufweisenden Sockel in einen zentralen Gehäuseboden eingeschraubt, wobei ein den Standfuß der Kartusche bildender Ringkragen stirnseitig das Gehäuse kontaktiert. Dies ist notwendig, damit eine Zylinderwand der Kartusche im richtigen Abstand zu einem Pumpkolben des Spenders ist und dieser damit korrekt funktioniert. Der im Bereich der Kartusche aufstehende Spender wird außen im Bereich des Gehäuses von einer Hand ergriffen und eine in das Kopfstück integrierte Betätigungshandhabe mittels eines Fingers dieser Hand gedrückt. Bei diesem Spender wird die Kartusche damit radial vom rohrförmigen Abschnitt des Gehäuses geführt und es ist der Sockel axial im zentralen Gehäuseboden gehalten. Fixiert wird die Kartusche durch den Anschlag des Ringkragens stirnseitig am Gehäuse im Bereich der unteren Öffnung des Gehäuses.

Aus der DE-A-39 24 926 ist eine Vorrichtung zum Auftragen von Flüssigkeit, beispielsweise einer kosmetischen Flüssigkeit, Tinte, Farbe oder einem flüssigen Arzneimittel bekannt. Die Flüssigkeit befindet sich in einer Patrone, die in einen Außenschaft eingeführt ist und hinten aus diesem herausragt. Beim Bewegen der Patrone in Längsrichtung relativ zum Außenschaft bewegt diese eine mit ihr zusammenwirkende Ventileinheit, die die Flüssigkeit beispielsweise auf ein Bürstenbüschel ausgibt.

Es ist Aufgabe der Erfindung, eine Presse der eingangs genannten Art so weiter zu bilden, daß bei dieser Kartuschen schnell und einfach gewechselt werden können. Der Füllzustand der Kartusche soll dabei erkennbar sein, desgleichen der Typ bzw. Hersteller des in der Kartusche befindlichen Schmierfettes. Die Dichtigkeit zwischen Kartusche und Presse soll sichergestellt sein. Die Kartusche soll sicher gegen Beschädigungen von außen geschützt sein und aufgrund der grundlegend konventionellen Pressenbauart hohen Belastungen bei der Bedienung standhalten.

Gelöst wird die Aufgabe bei einer Presse der eingangs genannten Art dadurch, daß ein Kartuschenanschlußelement vorgesehen ist, das zwischen dem Pressenkopf und dem Rohr gehalten ist, wobei das Anschlußelement einen Anschluß für die Kartusche aufweist, sowie das Rohr im Bereich seines dem Pressenkopf abgewandten Endes offen ausgebildet ist, wobei die mit dem Kartuschenanschlußelement verbundene Kartusche aus dem offenen Ende des Rohres ragt, radial vom Rohr geführt und axial durch das Anschlußelement gehalten und fixiert ist.

Bei der erfindungsgemäßen Presse ist damit ein Kartuschenanschlußelement vorgesehen, mit dem die Kartusche verbunden wird, wobei wesentlich ist, daß die Kartusche von dem dem Pressenkopf abgewandten Ende des Rohres in dieses eingesetzt wird. Die Abdichtung der Kartusche erfolgt direkt am Kartuschenanschlußelement, das deshalb einen Anschlag für die Kartusche bildet. Das Anschlußelement dient damit nicht nur dem Halten der Kartusche, sondern auch deren Fixierung aufgrund der Anschlagfunktion. Da die Kartusche eine größere Länge aufweist als das Rohr, kann das aus dem Rohr herausragende Ende der Kartusche bequem ergriffen werden, um die Kartusche mit dem Kartuschenanschlußelement zu verbinden oder von diesem zu trennen. Es ist hierbei wichtig, daß die zylindrische, steif ausgebildete Kartusche ausreichend weit aus dem Rohr ragt. Dies gewährleistet, daß die Kartusche gut ergriffen und fest eingeschraubt werden kann, mit der Folge der für die Funktion der erfindungsgemäßen Presse erforderlichen luftdichten Verbindung zwischen der Kartusche und dem Anschlußelement. Beim Betätigen der Presse ist damit das Ansaugen des Schmierfettes aus der Kartusche sichergestellt. Da zum Wechseln der Kartusche das Rohr nicht vom Pressenkopf entfernt werden muß, läßt sich die Kartusche sehr schnell und einfach wechseln und es ist die Handhabung der Presse wesentlich vereinfacht. Die Kartusche wird überdies durch das Rohr geschützt. Das aus dem Rohr hervorstehende Ende der Kartusche ist mit dem Hinweis betreffend den Schmierfetttyp und/oder dem Hersteller beschriftet. Dadurch, daß das dem Pressenkopf abgewandte Ende des Rohres offen ist, kann jederzeit die Position des Folgekolbens der Kartusche und damit deren Füllzustand erfaßt werden.

Das Kartuschenanschiußelement kann als separates Bauteil ausgebildet oder in den Pressenkopf integriert sein. Letzteres ist insbesondere bei einem in einem Form- oder Gießverfahren hergestellten Pressenkopf von. Vorteil. Eine bevorzugte Ausführungsform sieht vor, daß bei einem als separates Bauteil ausgebildeten Kartuschenanschlußelement dieses zwischen dem Pressenkopf und dem Rohr gehalten ist.

Vorzugsweise ist die Presse als Handhebelpresse, Einhandpresse oder pneumatische Presse ausgebildet.

Ist die Presse als Handhebelpresse ausgebildet und weist sie nur einen Handhebel auf, nämlich denjenigen zum Betätigen des Pumpenkolbens, übernimmt das Rohr die Funktion eines Griffrohres, das heißt es wird die Handhebelpresse beim Betätigen am Griffrohr und dem Handhebel erfaßt. Die Anzahl der Bauteile der Handhebelpresse kann gegenüber der herkömmlichen Handhebelpresse mit Rohr, Kolbenstange, Druckfeder, Manschette und Klemmhebel wesentlich vereinfacht werden. Die Herstellungskosten der erfindungsgemäßen Handhebelpresse sind damit entsprechend niedriger.

Die Konzeption der erfindungsgemäßen Presse ermöglicht eine wesentlich verbesserte Dichtigkeit gegenüber einer Presse mit Manschette. Die Kartusche ist dicht mit dem Kartuschenanschlußelement verbunden, das seinerseits abgedichtet zwischen dem Rohr und dem Pressenkopf positioniert ist. Der Folgekolben ist optimal auf die Kartusche abgestimmt.

Vorzugsweise ist das Kartuschenanschlußelement als rotationssymmetrischer Körper ausgebildet, mit einem Wulst, der zwischen dem Pressenkopf und dem in dieses eingeschraubten Rohr eingeklemmt ist, insbesondere unter Zwischenschaltung eines oder mehrerer Dichtelemente. Das Kartuschenanschlußelement wird damit bei der Montage der Presse zwischen dem Pressenkopf und dem Rohr positioniert. Zwischen dem Kolbenanschlußelement und dem eigentlichen Boden des Pressenkopfes verbleibt ein Raum zur Aufnahme der Viskosenmasse, der in Verbindung mit der Niederdruck-Ansaugöffnung des Pressenkopfes steht. Dieser Raum ist vorzugsweise so gestaltet, daß ein optimales Strömen der Viskosemasse aus der Kartusche in den Pressenkopf gewährleistet ist. Die Abdichtung zwischen dem Wulst des Kartuschenanschlußelementes und dem Pressenkopf erfolgt zweckmäßig mittels eines Dichtringes, oder im Falle eines Kunststoffteiles durch dieses selbst.

Gemäß einer ersten bevorzugten Ausführungsform der Erfindung ist vorgesehen, daß das Kartuschenanschlußelement einen Gewindeanschluß für die Kartusche im Bereich der Ausgabeöffnung aufweist.

Es ist damit eine Schraubverbindung zwischen Kartusche und Kartuschenanschlußelement vorgesehen. Gemäß einer vorteilhaften Weiterbildung ist das Kartuschenanschlußelement scheibenförmig ausgebildet, und es besitzt das Kartuschenanschlußelement eine dieses durchsetzende zentrale Gewindebohrung zur Aufnahme eines ein Außengewinde aufweisenden Ansatzes der Kartusche, wobei der Gewindeansatz mit der Ausgabeöffnung für die Viskosemasse versehen ist. Alternativ kann das Kartuschenanschlußelement einen Anschlußstutzen mit Außengewinde und innerer Öffnung aufweisen, wobei die Ausgabeöffnung der Kartusche ein Innengewinde aufweist. Die beiden vorgenannten Gestaltungen bedingen damit unterschiedliche Ausbildungen der Kartusche, einerseits mit einem Ansatz mit Außengewinde, anderseits eine in den Boden der Kartusche eingebrachte Öffnung mit Innengewinde.

Gemäß einer zweiten bevorzugten Ausführungsform der Erfindung ist vorgesehen, daß das Kartuschenanschlußelement einen Steckanschluß für die Kartusche aufweist. In diesem Fall sieht eine vorteilhafte Weiterbildung vor, daß das Kartuschenanschlußelement ringförmig ausgebildet ist, wobei die Wandstärke des Ringes relativ gering bemessen werden kann, da bei dieser Ausführungsform kein Gewinde zum Verbinden der Kartusche mit dem Kartuschenanschlußelement erforderlich ist. Gemäß einer zweckmäßigen Gestaltung ist vorgesehen, daß das Kartuschenanschlußelement im Bereich seines Außendurchmessers in dem dem Pressenkopf zugewandten Ende des Rohres zentriert sowie das dem Pressenkopf abgewandte Ende des Kartuschenanschlußelementes mit einer Ausnehmung zum Einstecken der Kartusche zwischen dem Anschlußelement und dem Rohr versehen ist. Es wird als besonders vorteilhaft angesehen, wenn das Kartuschenanschlußelement im Bereich seiner Ausnehmung mit einer Nut zur rastenden Verbindung mit einem Wulst der Kartusche und/oder mit einer Nut zur Aufnahme eines Dichtungsringes, insbesondere elastischen O-Ringes, versehen ist.

Grundsätzlich ist auch ein einteiliges Kartuschenanschlußelement realisierbar, bei dem durch die Wahl eines geeigneten Materials sowohl eine Dichtwirkung als auch eine Fixierung erzielt wird.

Die so bezeichnete Presse kann mit einer vollen Kartusche besonders einfach geladen werden, da nur nach dem Entfernen eines dem Pressenkopf zugewandten Verschlußdeckels der Kartusche diese in das Pressenrohr eingeschoben, und durch einen Druck über das Anschlußelement gepresst wird. Ebenso leicht läßt sich die leere Kartusche durch einfaches Abziehen wieder entfernen. Vorteilhaft an dieser Lösung ist weiterhin, daß das Anschlußelement mit einem dem Innendurchmesser der Kartusche nahekommenden Innendurchmesser ausgeführt werden kann, wodurch ein optimaler Viskosenmassezuflußraum zum Einströmen in die Einlaßöffnung der Presse gegeben ist.

Das Kartuschenanschlußelement besteht vorzugsweise aus Kunststoff oder Metall. Die Kartusche besteht bevorzugt aus Kunststoff und ist als relativ steifes Bauteil ausgebildet. Der Pressenkopf und das Rohr bestehen vorzugsweise aus Metall.

Da die Kartusche von hinten in das Rohr eingeschraubt bzw. eingesteckt wird, muß der Außendurchmesser der Kartusche nur auf den Innendurchmesser des Rohres abgestimmt werden. In diesem Zusammenhang wird vorgeschlagen, daß die Kartusche zylindrisch ausgebildet ist und der Außendurchmesser der Kartusche geringfügig kleiner ist als der Innendurchmesser des Rohres, so daß die Kartusche weitgehend spielfrei im Rohr gelagert ist. Beim Einsetzen einer neuen Kartusche wird diese somit definiert in die Verbindungsposition zum Kartuschenanschlußelement gebracht. Bei in das Kartuschenanschlußelement eingesetzter Kartusche sollte diese um etwa 20 bis 50 mm aus dem Rohr herausragen. Am überstehenden Kartuschenende kann beispielsweise die Fettsorte sowie der Fettlieferant kenntlich gemacht werden.

Eine besonders gestaltete zylindrische Kartusche zur Aufnahme von Viskosemasse, insbesondere von Schmierfett, kann nicht nur bei der erfindungsgemäß gestalteten Presse unter Verwendung des mit dem Gewinde vesehenen Kartuschenanschlußelementes, sondern auch bei herkömmlichen Pressen, die die Kolbenstange und die mittels der Feder vorgespannte Manschette aufweisen, eingesetzt zu werden.

Eine solche universell einsetzbare zylindrische Kartusche weist einen Rohrabschnitt mit über seine Länge gleichbleibendem Innen- und Außendurchmesser auf, wobei im Rohrabschnitt der Folgekolben verschiebbar gelagert ist und die Kartusche einen ebenen Boden besitzt, der mit einer zentralen Öffnung zur Ausgabe der Viskosenmasse aus der Kartusche versehen ist, sowie der Boden im Bereich der Öffnung ein Innengewinde besitzt. Die derart gestaltete Kartusche kann einerseits auf das dem Gewindeansatz aufweisende Kartuschenanschlußelement aufgeschraubt werden, andererseits wegen der flachen Gestaltung des Kartuschenbodens bei herkömmlichen Pressen Verwendung finden. Nach dem Zurückziehen der Kolbenstange und deren Arretieren mittels des Klemmhebels wird die Kartusche in das abgeschraubte Rohr von der Pressenkopfseite eingesetzt und das Rohr wieder mit dem Pressenkopf verschraubt. Um die Kolbenstange einschieben zu können, ist der Folgekolben beispielsweise mit einer zentralen Sollbruchstelle versehen. Beim Einschieben der Kolbenstange durchbricht der vordere Ansatz der Kolbenstange die Sollbruchstelle des Folgekolben und es durchsetzt der Ansatz der vollständig in das Rohr eingeschobenen Kolbenstange die zentrale Öffnung der Kartusche. Durch den Ringspalt zwischen der Kolbenstange bzw. dem Ansatz und der zentralen Öffnung im Kartuschenboden kann die Viskosemasse beim Verpressen aus der Kartusche in den Pressenkopf ausgegeben werden. Damit zwischen der Kartusche und dem Pressenkopf ein ausreichendes Volumen zum Nachfließen der Viskosemasse verbleibt, insbesondere im Bereich der Niederdruck-Ansaugöffnung, sollte die Kartusche im Bereich ihres Bodens einen über diesen überstehenden Ringwulst aufweisen, über den sich die Kartusche am Deckel des Pressenkopfes oder einem am Pressenkopf anliegenden Dichtelement abstützt.

Die leere Kartusche kann entweder durch eine neue, volle Kartusche ersetzt werden, oder aber es wird die leere Kartusche wieder gefüllt. Dies ist ohne Abschrauben des Rohres vom Pressenkopf beispielsweise dadurch möglich, daß der Pressenkopf mit einem Füllventil versehen ist.

Weitere Merkmale der Erfindung sind in der Beschreibung der Figuren und den Figuren selbst dargestellt, wobei bemerkt wird, daß alle Einzelmerkmale und alle Kombinationen von Einzelmerkmalen erfindungswesentlich sind.

In den Figuren ist die Erfindung anhand mehrerer Ausführungsformen beispielsweise dargestellt, ohne auf diese beschränkt zu sein. Es stellt dar:
- Figur 1: eine erste Ausführungsform einer Handhebelpresse, in einem Längsmittelschnitt,
- Figur 2: eine zweite Ausführungsform einer Handhebelpresse, in einem Längsmittelschnitt,
- Figur 3: eine Seitenansicht der in den Figuren 1 und 2 veranschaulichten Handhebelpressen,
- Figur 4: eine Ansicht A der in Figur 3 veranschaulichten Handhebelpresse,
- Figur 5: eine Ausführungsform einer pneumatischen Presse, in einem Längsmittelschnitt,
- Figur 6: eine dritte Ausführungsform einer Handhebelpresse, in einem Längsmittelschnitt, und
- Figur 7: eine vergrößerte Darstellung der in Figur 6 gezeigten Presse im Bereich des Kartuschenanschlußelementes.

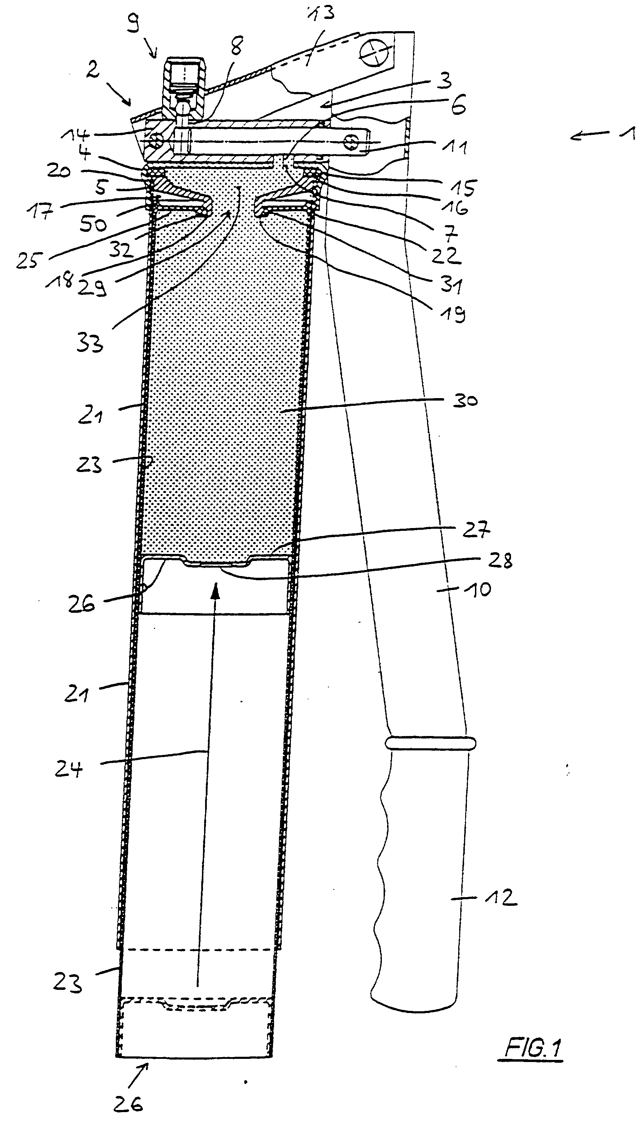

Die in den Figuren 1 bis 4 veranschaulichten Handhebelpressen 1 zum Verpressen von Viskosenmasse, insbesondere zum Verpressen von Schmierfett, weisen einen Pressenkopf 2 mit einer Hochdruck-Kolbenpumpe 3 auf. Diese ist mit einem Deckel 4 verbunden, der mit einem Innengewinde 5 versehen ist. Die Kolbenpumpe 3 weist eine Niederdruck-Ansaugöffnung 6 auf, die mit einer Bohrung 7 im Deckel 4 fluchtet. Des weiteren ist die Kolbenpumpe 3 mit einer Hochdruck-Auslaßöffnung 8 versehen, in die ein Rückschlagventil 9 eingesetzt ist. Ein Handhebel 10 ist schwenkbar im Kolben 11 der Kolbenpumpe 3 gelagert. Das dem Handgriff 12 des Handhebels 10 abgewandte Ende ist schwenkbar mit einem Verbindungshebel 13 verbunden, dessen anderes Ende schwenkbar im Gehäuse 14 der Kolbenpumpe 3 gelagert ist.

Der im wesentlichen rotationssymmetrisch ausgebildete Deckel 4 weist im Knickbereich zu seinem Rand einen nach außen gerichteten Wulst 15 auf. Im Bereich dieses Wulstes 15 ist in den Deckel ein Dichtring 15 eingelegt. Ein rotationssymmetrisch ausgebildetes Kartuschenanschlußelement 17 ist im wesentlichen kegelförmig ausgebildet und weist einen in seinem verjüngten Bereich angeordneten Ansatz 18 mit Außengewinde 19 sowie in seinem erweiterten, dem Wulst 15 bzw. dem Dichtring 16 zugewandten Bereich einen sich nach außen erstreckenden Wulst 20 auf. Der Außendurchmesser des Wulstes 20 ist auf den Innendurchmesser des Gewindeabschnittes des Deckels 4 abgestimmt, derart, daß das Kartuschenanschlußelement 17 mit minimalem Spiel in den Deckel 4 gegen den Dichtring 16 eingeführt werden kann. Ein Rohr 21 konstanten Innendurchmessers und konstanter Wandstärke, das im Bereich seines dem Pressenkopf 2 zugewandten Endes mit einem Außengewinde 22 versehen ist, ist in das Innengewinde 5 des Deckels 4 einschraubbar, wobei das Rohr 21 mit seiner Stirnfläche den Wulst 20 des Kartuschenanschlußelementes 17 kontaktiert und dieses gegen den Dichtring 16 drückt. Das Rohr 21 bewirkt damit eine dichte Verbindung von Kartuschenanschlußelement 17 und Deckel 4.

In das Rohr ist eine zylindrische Kartusche 23 eingesetzt, die über ihre gesamte Länge denselben Außendurchmesser aufweist, der geringfügig geringer ist als der Innendurchmesser des Rohres 21, so daß die Kartusche von hinten, somit in Richtung des Pfeiles 24 im wesentlichen spielfrei in das Rohr 21 eingeführt werden kann. Die Kartusche besteht aus steifem Kunststoff und besitzt im Bereich ihres dem Kartuschenaufnahmeelement 17 zugewandten Endes einen flachen Boden 25 sowie diesem abgewandt einen Folgekolben 26. Dieser ist im zentralen Bereich seiner Kolbenplatte 27 mit einer Sollbruchstelle 28 versehen. Der Boden 25 der Kartusche 23 weist konzentrisch zur Längsmittelachse der Kartusche 23 eine Ausgabeöffnung 29 für das in der Kartusche 23 aufgenommene Fett 30 auf, wobei der die Öffnung 29 bildende Ringabschnitt 31 mit einem Innengewinde 32 versehen ist, dessen Gewindedurchmesser dem des Außengewindes 19 des Ansatzes 18 am Kartuschenanschlußelement 17 entspricht. Am äußeren Rand des Bodens 25 befindet sich ein axial erstreckender Ringwulst 50.

Nicht gezeigt ist in den Figuren ein Verschlußelement, insbesondere ein als Gewindestopfen ausgebildetes Verschlußelement, das in die Ausgabeöffnung 29 der Kartusche 23 eingeschraubt ist und diese bis zum Beschicken der Handhebelpresse verschließt. Soll die Handhebelpresse beschickt werden, wird das Verschlußelement abgeschraubt und es ist nur notwendig, die gefüllte Kartusche 23 geführt in das Rohr 21 einzustecken und mit dem Kartuschenanschlußelement 17 zu verschrauben. Die Länge der Kartusche 23 ist dabei so bemessen, daß sie in mit dem Anschlußelement 17 verschraubtem Zustand aus dem Rohr 21 herausragt und somit optimal ergriffen werden kann und im übrigen die auf der Kartusche angebrachte Angaben über Fettsorte und/oder Fettlieferant einsehbar sind. Figur 1 veranschaulicht mit strichlierten Linien den Folgekolben 26 bei vollständig gefüllter Kartusche 23 und mit durchgezogenen Linien bei etwa halb entleerter Kartusche. Das eigentliche Verpressen der Viskosenmasse, insbesondere des Schmierfettes geschieht dabei wie folgt: Die Handhebelpresse 1 wird mit zwei Händen ergriffen, eine Hand erfaßt das Rohr 21 im Bereich seines freien Endes, die andere Hand den Griff 12 des Handhebels 10. Wird der Griff 12 vom Rohr 21 wegbewegt, erzeugt der Kolben 11 bei geschlossenem Rückschlagventil 9 einen Unterdruck im Zylinder der Kolbenpumpe 3. Sobald der Handhebel 10 so weit verschwenkt ist, daß der Kolben 11 die Öffnungen 6 und 7 frei gibt, strömt das Schmierfett von dem innerhalb des Kartuschenanschlußelementes 17 gebildeten Raumes 33 in den Zylinder 14 der Kolbenpumpe 3, so daß beim Rückschwenken des Handhebels und damit dem Verfahren des Kolbens 11 das Fett durch die Hochdruck-Auslaßöffnung 8 und den Anschluß mit dem Rückschlagventil 9 abgefördert wird. Befindet sich anfänglich noch kein Fett im Raum 33, muß mehrfach gepumpt werden, wobei das Einströmen von Fett in den Raum 33 durch manuelles Beaufschlagen des Folgekolbens 26 unterstützt werden kann.

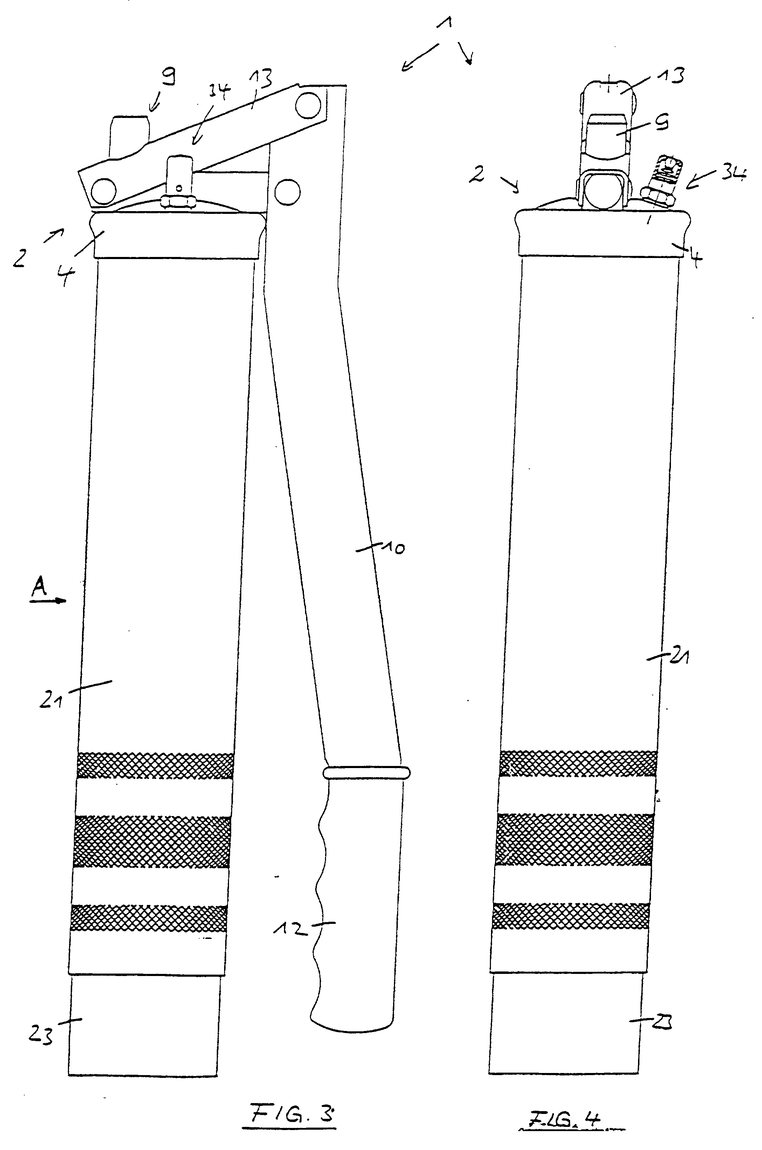

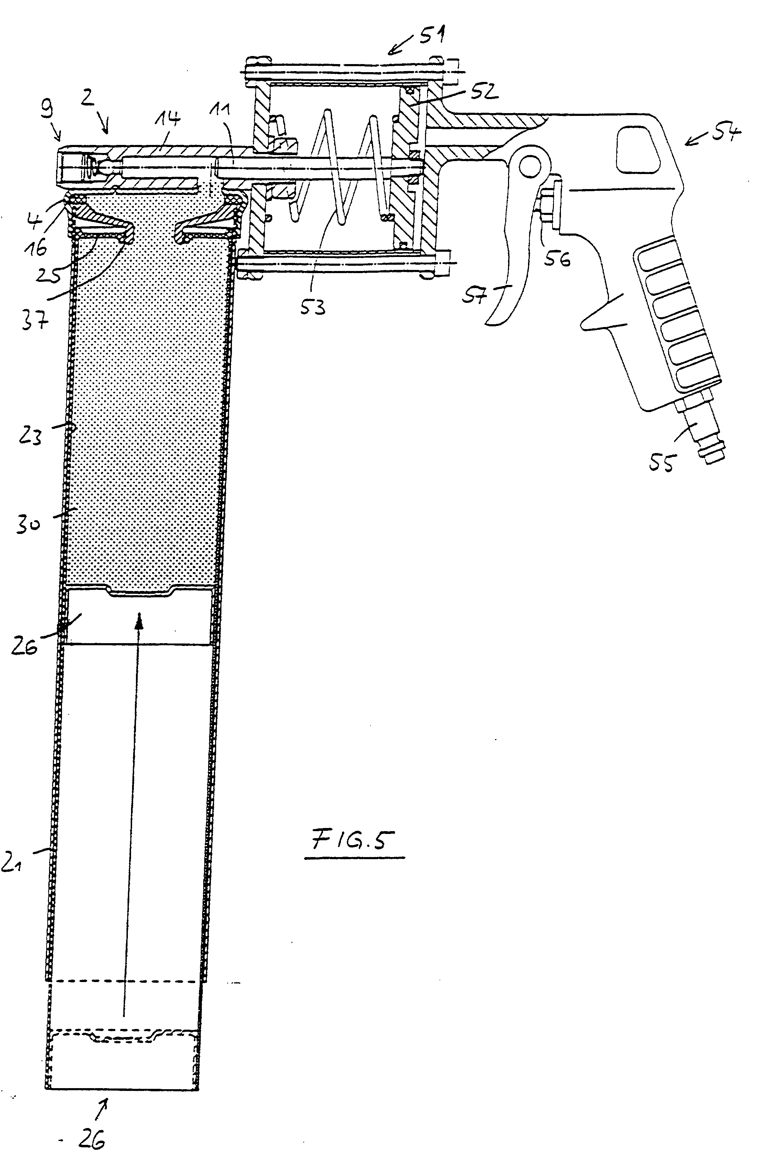

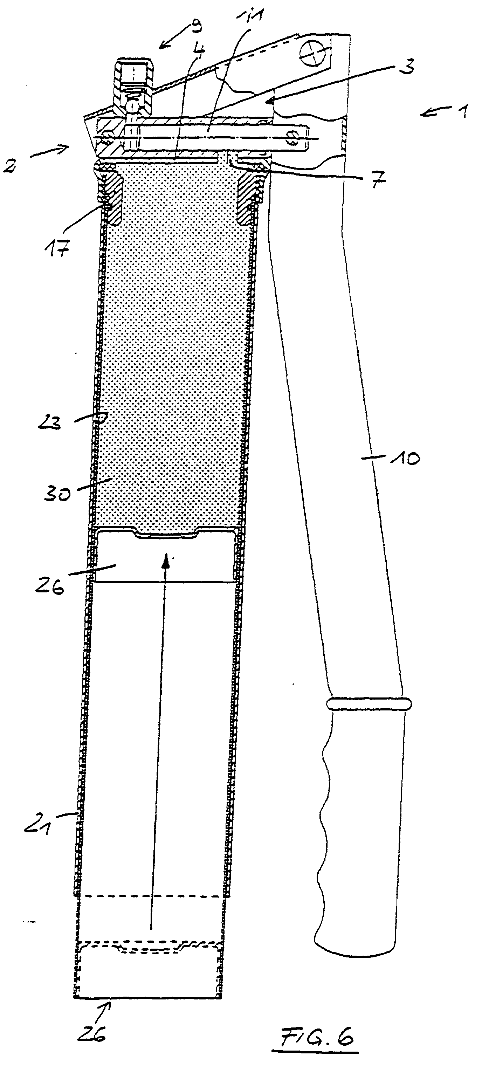

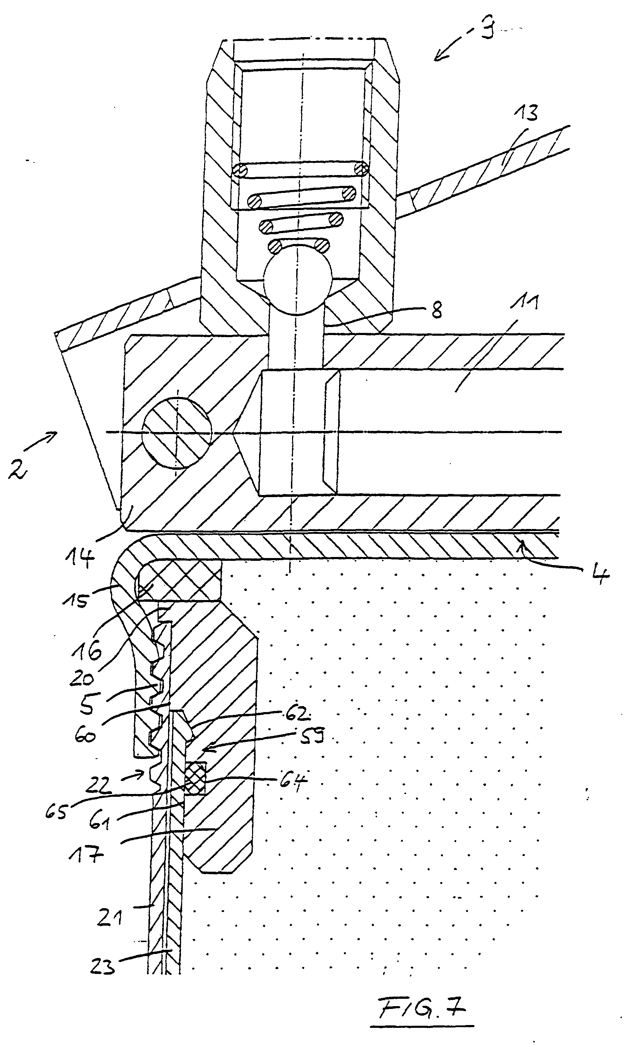

Wie der Darstellung der Figuren 3 und 4 zu entnehmen ist, weist der Pressenkopf 2 zusätzlich ein Füllventil 34 auf, über das die entleerte Kartusche 23 wieder gefüllt werden kann, sofern nicht gewünscht ist, eine leere Kartusche gegen eine neue, gefüllte auszutauschen. Das Füllventil 34 ist als Rückschlagventil ausgebildet.

Soll eine verbrauchte Kartusche 23 gegen eine neue ersetzt werden, ist es nur erforderlich, die leere Kartusche in dem Bereich, wo sie aus dem Rohr 21 ragt, zu ergreifen und aus dem Kartuschenanschlußelement 17 herauszuschrauben. Anschließend kann eine neue Kartusche 23 in das Rohr 21 eingeführt und mit dem Kartuschenanschlußelement 17 verschraubt werden.

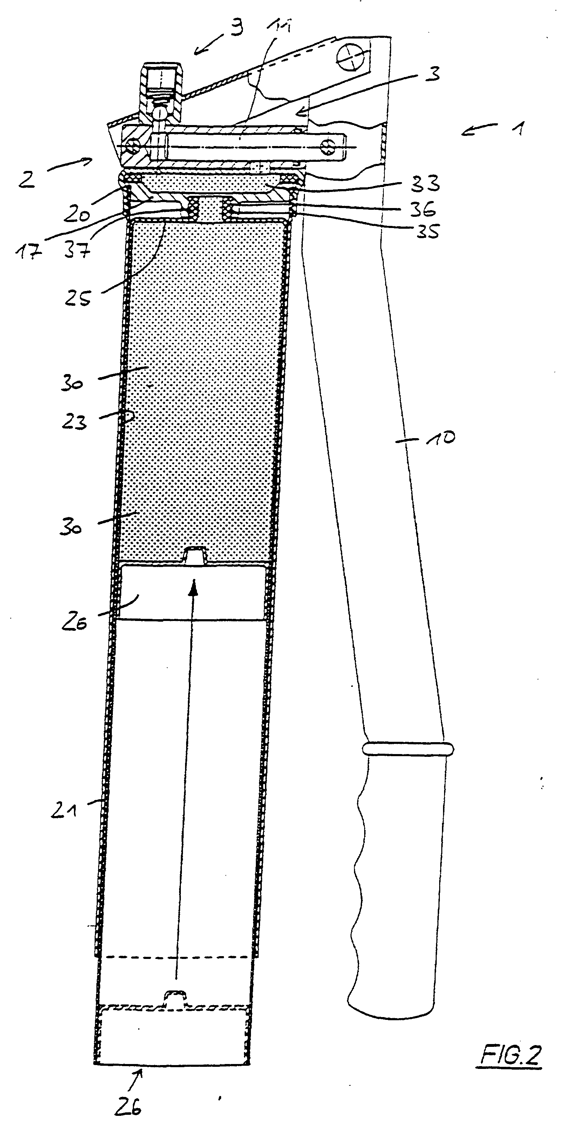

Bei der Ausführungsform nach Figur 2 ist gegenüber der Ausführungsform nach Figur 1 das Kartuschenanschlußelement 17 und die Kartusche 23 modifiziert. Statt eines Ringabschnittes 31 mit Innengewinde 32 weist die Kartusche 23 im Bereich ihres Bodens 25 einen zentralen, zum Deckel 4 gerichteten Ansatz 35 mit Außengewinde 36 auf und es ist der Ringwulst nicht vorhanden. Statt der Ausbildung des Kartuschenanschlußelementes 17 als konisches Bauteil mit Ansatz 18 und Außengewinde 19 ist das Kartuschenanschlußelement 17 als dickwandige Platte mit Wulst 20 ausgebildet, wobei die Platte eine Bohrung mit Innengewinde 37 aufweist. Mit dieser Gestaltung wird, genauso wie bei der Ausführungsform nach der Figur 1, das Kartuschenanschlußelement 17 im Bereich seines Wulstes 20 zwischen dem Rohr 21 und dem Deckel 4 bzw. dem in diesen eingelegten Dichtring 16 fixiert. Die Kartusche 23 wird im Bereich ihres Ansatzes 35 in das Kartuschenanschlußelement 17 eingeschraubt.

Figur 5 zeigt eine Ausführungsform der erfindungsgemäßen Presse, die als pneumatische Einhandpresse ausgebildet ist. Bei dieser ist der Deckel 4, das Rohr 21 und das Kartuschenanschlußelement 17 gemäß den entsprechenden Teilen der Ausführungsform nach der Figur 1 ausgebildet. Das Kartuschenanschlußelement dient der Aufnahme der vorbeschriebenen Kartusche 23. Es wird insofern auf die vorstehenden Ausführungen verwiesen. - Bei der pneumatischen Einhandpresse weist das mit dem Deckel 4 verbundene Gehäuse 14 der Kolbenpumpe 3 das Rückschlagventil 9 mit Hochdruck-Auslaßöffnung 8 auf. Mit der Kolbenpumpe 3 ist ein Pneumatikzylinder 51 verbunden, dessen Kolben 52 mittels Druckluft gegen die Kraft einer Spiralfeder 53 verschiebbar ist. Mit dem Luftkolben 52 ist der Kolben 11 der Hochdruck-Kolbenpumpe 3 verbunden. Am Pneumatikzylinder 51 ist ein Griffstück 54 angeflanscht, das einen Druckluftanschluß 55 sowie ein Ventil 56 mit Abzughebel 57 zum Auslösen des Hubes des Kolbens 52 aufweist.

Die Ausführungsform der Presse gemäß den Figuren 6 und 7 ist gegenüber den Ausführungs formen nach den Figuren 1, 2 und 9 dahingehend modifiziert, daß statt der zu den letztgenannten Ausführungsformen beschriebenen Gewindeverbindung von Kartusche 23 und Kartuschenanschlußelement 17 ein Steckanschluß 59 zwischen diesen vorgesehen ist. In ihrer Funktion bzw. in ihrem Aufbau übereinstimmende Teile dieser Ausführungsformen sind der Einfachheit halber mit denselben Bezugsziffern bezeichnet.

Die die Presse im Bereich des Deckels 4 in vergrößertem Maßstab veranschaulichende Figur 7 zeigt das ringförmig ausgebildete Kartuschenanschlußelement 17, das im Bereich seines Außendurchmessers 60 in dem dem Pressenkopf 2 zugewandten Ende des Rohres im Bereich dessen Innendurchmesser zentriert. Das dem Pressenkopf 2 abgewandte Ende des Kartuschenanschlußelementes 17 ist mit einer außen umlaufenden Ausnehmung 61 zum Einstecken der Kartusche 23 zwischen dem Anschlußelement 17 und dem Rohr 23 versehen. Ferner weist das Kartuschenanschlußelement 17 im Bereich seiner Ausnehmung 61 eine Nut 62 zur rastenden Verbindung mit einem Wulst 63 der Kartusche 23 auf. Die Ausnehmung 61 ist ferner mit einer Ringnut 64 zur Aufnahme eines Dichtrings 65 versehen. Dieser als 0-Ring ausgebildete Dichtring 65 dichtet das Anschlußelement 17 vollständig zur Kartusche 23 ab. Die Verbindung von Kartuschenanschlußelement 17 und Kartusche 23 erfolgt auf einfache Art und Weise durch Einstecken des freien Kartuschenendes in das Anschlußelement 17 bzw. durch Abziehen der Kartusche 23 vom Kartuschenanschlußelement 17.

## Patentansprüche

1. Presse zum Verpressen von Schmierfetten, mit einem Pressenkopf und einer Hochdruck-Kolbenpumpe, einer Hochdruck-Auslaßöffnung mit Rückschlagventil und einer Niederdruck-Ansaugöffnung zum Zuführen der zu verpressenden Masse zur Kolbenpumpe, einer Vorrichtung zum Betätigen des Pumpenkolbens der Kolbenpumpe und einem Anschluß am Pressenkopf zum Verbinden eines Rohres mit dem Pressenkopf, wobei das Rohr eine mit dem Schmierfett gefüllte, zylindrisch ausgebildete Kartusche mit verschieblichem Folgekolben aufnimmt, **dadurch gekennzeichnet**, daß ein Kartuschenanschlußelement (17) vorgesehen ist, wobei das Anschlußelement (17) einen Anschluß (18, 37) für die Kartusche (23) aufweist, sowie das Rohr (21) im Bereich seines dem Pressenkopf (2). abgewandten Endes offen ausgebildet ist, wobei die mit dem Kartuschenanschlußelement (17) verbundene Kartusche (23) aus dem offenen Ende des Rohres (21) ragt, radial vom Rohr (21) geführt und axial durch das Anschlußelement (17) gehalten und fixiert ist.

2. Presse nach Anspruch 1, **dadurch gekennzeichnet,** daß das Kartuschenanschlußelement (17) als separates Bauteil ausgebildet ist, das zwischen dem Pressenkopf (2) und dem Rohr (21) gehalten ist.

3. Presse nach Anspruch 1 oder 2, **dadurch gekennzeichnet,** daß die Presse als Handhebelpresse, Einhandpresse oder pneumatische Presse ausgebildet ist.

4. Presse nach einem der Ansprüche 1 bis 3, **dadurch gekennzeichnet,** daß das Kartuschenanschlußelement (17) als rotationssymmetrischer Körper ausgebildet ist, mit einem Wulst (20), der zwischen dem Pressenkopf (2) und dem in dieses eingeschraubten Rohr (21) eingeklemmt ist, insbesondere unter Zwischenschaltung eines Dichtelementes (16).

5. Presse nach einem der Ansprüche 1 bis 4, **dadurch gekennzeichnet**, daß das Kartuschenanschlußelement (17) einen Gewindeanschluß (18, 37) für die Kartusche (23) aufweist.

6. Presse nach Anspruch 3, **dadurch gekennzeichnet,** daß das Kartuschenanschlußelement (17) scheibenförmig ausgebildet ist und eine dieses durchsetzende zentrale Gewindebohrung (37) zur Aufnahme eines ein Außengewinde (36) aufweisenden Ansatzes (35) der Kartusche (23) aufweist, wobei der Gewindeansatz (35) mit der Ausgabeöffnung (29) für die Viskosemasse (30) versehen ist.

7. Presse nach Anspruch 5 oder 6, **dadurch gekennzeichnet,** daß das Kartuschenanschlußelement (17) einen Ansatzstutzen (18) mit Außengewinde (19) und innerer Öffnung aufweist, wobei die Ausgabeöffnung (29) der Kartusche (23) ein Innengewinde (32) aufweist.

8. Presse nach einem der Ansprüche 1 bis 4, **dadurch gekennzeichnet,** daß das Kartuschenanschlußelement (17) einen Steckanschluß (59) für die Kartusche (23) aufweist.

9. Presse nach Anspruch 8, **dadurch gekennzeichnet,** daß das Kartuschenanschlußelement (17) ringförmig ausgebildet ist.

10. Presse nach Anspruch 8 oder 9, **dadurch gekennzeichnet,** daß das Kartuschenanschlußelement (17) im Bereich seines Außendurchmessers (50) in dem dem Pressenkopf (2) zugewandten Ende des Rohres (21) zentriert, sowie das dem pressenkopf (2) abgewandte Ende des Kartuschenanschluß elementes (17) mit einer Ausnehmung (61) zum Einstecken der Kartusche (23) zwischen dem Anschlußelement (17) und dem Rohr (21) versehen ist.

11. Presse nach Anspruch 10, **dadurch gekennzeichnet,** daß das Kartuschenanschlußelement (17) im Bereich seiner Ausnehmung (61) mit einer Nut (62) zur rastenden Verbindung mit einem Wulst (63) der Kartusche (23) und/oder mit einer Nut (64) zur Aufnahme eines Dichtringes (65) versehen ist.

12. Presse nach einem der Ansprüche 1 bis 11, **dadurch gekennzeichnet,** daß das Kartuschenanschlußelement (17) aus Kunststoff oder Metall besteht.

13. Presse nach einem der Ansprüche 1 bis 12, **dadurch gekennzeichnet,** daß die Kartusche (23) zylindrisch ausgebildet ist und der Außendurchmesser der Kartusche (23) geringfügig geringer ist als der Innendurchmesser des Rohres (21).

14. Presse nach einem der Ansprüche 1 bis 13, **dadurch gekennzeichnet,** daß die mit dem Kartuschenanschlußelement (17) verbundene Kartusche (23) um 20 bis 50 mm aus dem Rohr (21) herausragt.

15. Presse nach einem der Ansprüche 1 bis 14, **dadurch gekennzeichnet**, daß der Pressenkopf (2) mit einem Füllventil (34) versehen ist.

## Claims

1. Press for extruding lubricating grease, with a press head with a high-pressure reciprocating pump, a high-pressure outlet opening with check valve, a low-pressure intake opening for feeding to the reciprocating pump the mass to be extruded, a device for actuating the pump piston of the reciprocating pump, and a connection on the press head for connecting a pipe to the press head, the pipe containing a lubricating grease filled, cylindrically shaped cartridge with a displaceable trailing piston, characterized by the fact that provision is made for a cartridge-connecting element (17) that displays a connection (18, 37) for the cartridge (23), and by the fact that the pipe (21) is formed open in the region of its end turned away from the press head (2), the cartridge (23), when connected to the cartridge-connecting element (17), protruding from the open end of the pipe (21), guided radially by the pipe (;21} and held fixed axially by the connecting element (17).

2. Press according to Claim 1, characterized by the fact that the cartridge-connecting element (17) is designed as a separate component that is held between the press head (2) and the pipe (21).

3. Press according to Claim 1 or 2, characterized by the fact that the press is designed as a hand lever press, a one-hand press, or a pneumatic press.

4. Press according to one of the Claims 1 through 3, characterized by the fact that the cartridge-connecting element (17) is formed as a rotationally-symmetric body, with a bead (20), which is clamped in between the press head (2) and the pipe (21) screwed into the latter, a sealing element (16) being interposed.

5. Press according to one of the Claims 1 through 4, characterized by the fact that the cartridge-connecting element (17) displays a threaded connection (18, 37) for the cartridge (23).

6. Press according to Claim 5, characterized by the fact that the cartridge-connecting element (17) has a disc-shaped design and displays a central threaded bore (37) that passes through this disc and serves to receive a projection (35) of the cartridge (23) that displays an outer thread 136), the threaded projection (35) being provided with the outlet opening (29) *for* the viscous mass (30).

7. Press according to Claim 5 or 6, characterized by the fact that the cartridge-connecting element (17) displays a projecting connection piece (18) with an outer thread (19) and an inner opening, the outlet opening (29) of the cartridge (23) displaying an inner thread (32).

8. Press according to one of the Claims 1 through 4, characterized by the fact that the cartridge-connecting element (17) displays a plug connection (59) for the cartridge (23).

9. Press according to Claim 8, characterized by the fact that the cartridge-connecting element (17) has a ring-shaped design.

10. Press according to Claim 8 or 9, characterized by the fact that the cartridge-connecting element (17) is centered in the region of its outer diameter (60) in the end of the pipe (21) that is turned towards the press head (2), and the end of the cartridge-connecting element (17) turned away from the press head (2) is provided with a recess (61) for inserting the cartridge (23) in between the connecting element (17) and the pipe (21).

11. Press according to Claim 10, characterized by the fact that the cartridge-connecting element (17) is, in the region of its recess (61), provided with a groove (62) for a locking connection to a bead (63) of the cartridge (23) and/or is provided with a groove (64) for receiving a sealing ring (65).

12. Press according to one of the Claims 1 through 11, characterized by the fact that the cartridge-connecting element (17) consists of plastic or metal.

13. Press according to one of the Claims 1 through 12, characterized by the fact that the cartridge (23) has a cylindrical design and the outer diameter of the cartridge (23) is slightly smaller than the inner diameter of the pipe (21).

14. Press according to one of the Claims 1 through 13, characterized by the fact that the cartridge (23), when connected to the cartridge-connecting element (17), protrudes 20 to 50 mm from the pipe (21).

15. Press according to one of the Claims 1 through 14, characterized by the fact that the press head (2) is provided with a filling valve (34).

## Revendications

1. Injecteur à graisse pour la compression de graisses de lubrification, comprenant une tête de compression et une pompe à piston haute pression, une ouverture de sortie haute pression comprenant une soupape anti-retour et une ouverture d'aspiration basse pression pour acheminer la matière à comprimer à la pompe à piston, un dispositif pour actionner le piston de la pompe et un raccord sur la tête de compression pour relier un tube à la tête de compression, dans lequel une cartouche réalisée en forme cylindrique, remplie avec la graisse de lubrification et comprenant un piston secondaire mobile vient se loger dans le tube, **caractérisé en ce qu**'on prévoit un élément de raccordement de cartouche (17), l'élément de raccordement (17) présentant un raccord (18, 37) pour la cartouche (23) et le tube (21) étant réalisé pour être ouvert dans la zone de son extrémité se détournant de la tête de compression (2), dans lequel la cartouche (23) reliée à l'élément de raccordement de cartouche (17) fait saillie par rapport à l'extrémité ouverte du tube (21), est guidé en direction radiale par le tube (21) et est maintenu et fixé en direction axiale par l'élément de raccordement (17).

2. Injecteur à graisse selon la revendication 1, **caractérisé en ce que** l'élément de raccordement de cartouche (17) est réalisé sous la forme d'un composant séparé qui est maintenu entre la tête de compression (32) et le tube (21).

3. Injecteur à graisse selon la revendication 1 ou 2, **caractérisé en ce que** l'injecteur est réalisé sous la forme d'un injecteur à levier, d'un injecteur à une main ou d'un injecteur pneumatique.

4. Injecteur à graisse selon l'une quelconque des revendications 1 à 3, **caractérisé en ce que** l'élément de raccordement de cartouche (17) est réalisé sur la forme d'un corps à symétrie de rotation comprenant un bourrelet (20) qui est pincé entre la tête de compression (2) et le tube (21) vissé dans cette dernière, en particulier en intercalant un élément d'étanchéisation (16).

5. Injecteur à graisse selon une quelconque des revendications 1 à 4, **caractérisé en ce que** l'élément de raccordement de cartouche présente un raccord fileté (18, 37) pour la cartouche (23).

6. Injecteur à graisse selon la revendication 5, **caractérisé en ce que** l'élément de raccordement de cartouche (17) est réalisé en forme de disque et présente un alésage taraudé central (37) traversant le premier cité pour que vienne s'y loger une saillie (35) de la cartouche (23) possédant un filet de vis externe (36), dans lequel la saillie filetée (35) est munie de l'ouverture de sortie (29) pour la matière visqueuse (30).

7. Injecteur à graisse selon la revendication 5 ou 6, **caractérisé en ce que** l'élément de raccordement de cartouche (17) présente une tubulure (18) comprenant un filet de vis externe (19) et une ouverture interne, une ouverture de sortie (29) de la cartouche (23) présentant un filet de vis interne (32).

8. Injecteur à graisse selon l'une quelconque des revendications 1 à 4, **caractérisé en ce que** l'élément de raccordement de cartouche (17) présente un raccord d'enfichage (59) pour la cartouche (23).

9. Injecteur à graisse selon la revendication 8, **caractérisé en ce que** l'élément de raccordement de cartouche (17) est réalisé sous forme annulaire.

10. Injecteur à graisse selon la revendication 8 ou 9, **caractérisé en ce que** l'élément de raccordement de cartouche (17) est centré dans la zone de son diamètre externe (60) dans l'extrémité du tube (21) tournée vers la tête de compression (32) et l'extrémité de l'élément de raccordement de cartouche (17), se détournant de la tête de compression (32), est muni d'un évidement (61) pour l'enfichage de la cartouche (23) entre l'élément de raccordement (17) et le tube (21).

11. Injecteur à graisse selon la revendication 10, **caractérisé en ce que** l'élément de raccordement de cartouche (17) est muni, dans la zone de son évidement (61), d'une rainure (62) pour la liaison par encliquetage avec un bourrelet (63) de la cartouche (23) et/ou d'une rainure (64) pour que vienne s'y insérer un anneau d'étanchéité (65).

12. Injecteur à graisse selon l'une quelconque des revendications 1 à 11, **caractérisé en ce que** l'élément de raccordement de cartouche (17) est constitué d'une matière synthétique ou de métal.

13. Injecteur à graisse selon l'une quelconque des revendications 1 à 12, **caractérisé en ce que** la cartouche (13) est réalisée sous forme cylindrique et le diamètre externe de la cartouche (23) est légèrement inférieur au diamètre interne du tube (21).

14. Injecteur à graisse selon l'une quelconque des revendications 1 à 13, **caractérisé en ce que** la cartouche (23) reliée à l'élément de raccordement de cartouche (17) fait saillie par rapport au tube (21) sur une distance de 20 à 50 mm.

15. Injecteur à graisse selon l'une quelconque des revendications 1 à 14, **caractérisé en ce que** la tête de compression (2) est munie d'une soupape de remplissage (34).
